(19) Europäisches Patentamt
European Patent Office
Office européen des brevets

(11) Publication number : **0 433 016 B1**

(12) # EUROPEAN PATENT SPECIFICATION

(45) Date of publication of patent specification : **27.10.93 Bulletin 93/43**

(51) Int. Cl.$^5$ : **A23D 9/00**

(21) Application number : **90313441.9**

(22) Date of filing : **11.12.90**

(54) **Compositions useful as high temperature media.**

(30) Priority : **11.12.89 US 448400**

(43) Date of publication of application : **19.06.91 Bulletin 91/25**

(45) Publication of the grant of the patent : **27.10.93 Bulletin 93/43**

(84) Designated Contracting States : **BE DE FR GB IT NL**

(56) References cited :
**EP-A- 0 254 547**
**EP-A- 0 287 157**
**EP-A- 0 396 406**
**US-A- 2 968 563**
**US-A- 3 490 918**

(56) References cited :
**US-A- 4 169 901**
**US-A- 4 849 242**
**M.M.CHRYSAM & col.: "Bailey's Industrial Oil and Fat Products, vol. 3", 1985, John Wiley & Sons, US**

(73) Proprietor : **ARCO Chemical Technology, L.P.**
**3 Christina Centre, Suite 902, 201 N. Walnut Street**
**Wilmington, Delaware 19801 (US)**

(72) Inventor : **Cooper, Charles F.**
**26 Wistar Road**
**Paoli, PA 19301 (US)**

(74) Representative : **Cropp, John Anthony David et al**
**MATHYS & SQUIRE 10 Fleet Street**
**London, EC4Y 1AY (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Jouve, 18, rue Saint-Denis, 75001 PARIS

## Description

### FIELD OF THE INVENTION

This invention pertains to compositions useful as high temperature media. More specifically, the invention relates to compositions comprising edible lipids having iodine numbers of at least about 10 such as derived from vegetable, animal or marine sources and aliphatic ethers such as polyethers having oxyalkylene repeating units.

This invention additionally pertains to a method of thermally stabilizing aliphatic ethers.

### BACKGROUND OF THE INVENTION

Aliphatic ethers, especially polyethers, are commonly employed in end-use applications requiring exposure to high temperatures for extended periods of time. However, the general susceptibility of aliphatic ethers to thermal and oxidation degradation due to the inherently unstable nature of the ether bond has somewhat limited such uses due to the tendency of aliphatic ethers to evolve volatile decomposition products at high service temperatures.

For example, esterified alkoxylated polyols have recently been proposed for use as reduced calorie fat substitutes (as described in U.S. Pat. No. 4,861,613). Although esterified alkoxylated polyols may be readily incorporated into baked goods or in foods such as salad dressing or ice cream which do not require heating, such materials show signs of instability in pan frying or deep fat frying applications. Of the many tests available for measuring thermal stability, the one that has been found most useful for comparing the stability of esterified alkoxylated polyols with that of conventional edible oils is weight loss over time at a constant temperature. This is a useful test from a practical standpoint since cooking oils or fats will last longer and need less-frequent replenishing if weight loss can be minimized. The same weight loss problem may also be observed to a lesser extent in baking or other cooking techniques employing lower temperatures than frying. Although decomposition is expected to be less pronounced at lower temperatures, enhanced stabilization is still highly desirable.

Similarly, polyethers such as polypropylene glycol and ethylene oxide/propylene oxide copolyether polyols are often utilized as lubricants, hydraulic fluids, heat transfer media, or other types of functional fluids. Polyether functional fluids are typically subjected to high temperatures for extended periods of time and thus require stabilization against thermal degradation.

US-A-3490918 describes improved shortening products comprising a liquid or plastic shortening and 0.1 to 15 weight percent of an ethoxylated partial glycerol ester of a $C_{10}$-$C_{24}$ fatty acid or mixture thereof. The ester is added to improve the dough conditioning properties and storage stability. There is no discussion in this publication of the thermal or oxidative stability of the esters.

Bailey's Industrial Oil and Fat Products, Vol. 3, John Wiley and Sons, New York, USA, starting at page 111, discusses the stability of oils used in frying and teaches that increased stability is associated with less polyunsaturation. Results reported in the Table on page 112 suggest that increased stability is associated with a decrease in iodine value.

According to the present invention, there is provided a reduced calorie oil-like composition suitable for use as a high temperature cooking medium comprising

(a) from 25 to 75 weight percent of a substantially non-caloric esterified propoxylated glycerin of formula

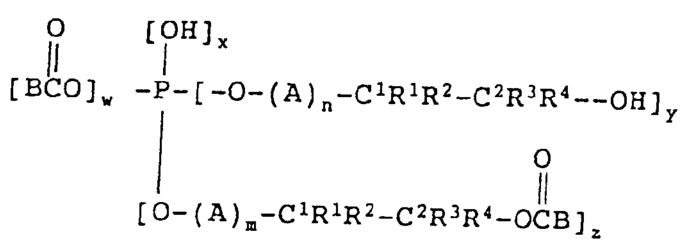

wherein P is a glyceryl radical, the sum of w + x + y + z is 3, $\frac{x + y}{w + x + y + z}$ is an average number less than 0.15, z is an average number in the range of from 2 to 3, A is an oxypropylene unit, the average value of [(m · z) + (n · y)] is in the range from O to 25, B is a $C_{11}$-$C_{21}$ hydrocarbon group, one only of $R^1$, $R^2$, $R^3$, and $R^4$ is methyl with the other R groups being hydrogen, and $C^2$ is a carbon that on average is from O to 15 percent primary; and

(b) from 25 to 75 weight percent of an edible lipid containing a glyceryl ester of a $C_{12}$-$C_{24}$ unsaturated fatty acid, wherein the lipid has an iodine number of at least 10 and wherein the amount of lipid is sufficient to synergistically enhance the thermal stability of the esterified propoxylated glycerol.

The composition is useful as a reduced calorie high temperature cooking medium having enhanced thermal stability.

The invention also provides a method of thermally stabilizing an esterified propoxylated glycerol of formula

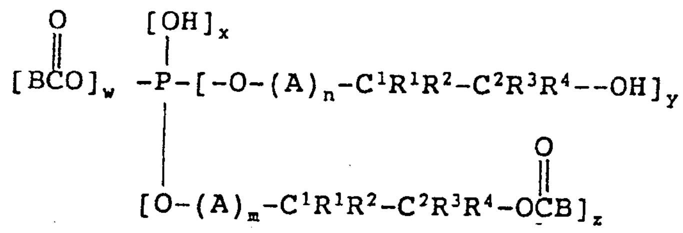

wherein P is a glyceryl radical, the sum of w + x + y + z is 3, $\frac{x + y}{w + x + y + z}$ is an average number less than 0.15, z is an average number in the range of from 2 to 3, A is an oxypropylene unit, the average value of [(m · z) + (n · y)] is in the range from O to 25, B is a $C_{11}$-$C_{24}$ hydrocarbon group, one only of $R^1$, $R^2$, $R^3$, and $R^4$ is methyl with the other R groups being hydrogen and

$C^2$ is a carbon that on average is from O to 15 percent primary, which comprises combining from 25 to 75 parts by weight of the esterified propoxylated glycerol with 100-X parts by weight of an edible lipid containing a glyceryl ester of a $C_{12}$-$C_{24}$ unsaturated fatty acid and having an iodine number of at least 10, wherein X represents the parts by weight of the esterified propoxylated glycerol.

Preferably z is 3; that is, each of w, x and y is zero.

It is also preferred that B is a saturated hydrocarbon group.

It is further preferred that $C^2$ is a carbon that is an average from 0 to 5 percent primary.

The esterified propoxylated glycerin preferably has a number average molecular weight of from about 250 to 30,000 and preferably has a boiling point at atmospheric pressure of at least about 200°C. It is generally desirable that it be liquid or a low melting solid and substantially miscible with the lipid component of the composition. Illustrative esterified alkoxylated glycerins suitable for use in the compositions of this invention are described in more detail in U.S. Pat. No. 4,861,613.

The other component of the composition of this invention is an edible lipid containing a glyceryl ester of a $C_{12}$-$C_{24}$ unsaturated fatty acid said lipid having an iodine number of at least about 10. More preferably, the iodine number is at least about 50. Any ester of a long chain carboxylic acid may be employed, provided it contains at least some unsaturation, but preferably a $C_{12}$-$C_{24}$ fatty acid ester of glycerin (a mono-, di-, or triglyceride, for example) is employed. The lipids (i.e. fats or oils, which may be derived from vegetable, animal or marine sources, are well-known and readily available, as described in "Fats and Fatty Oils" Kirk Othmer Encyclopedia of Chemical Technology Vol. 9, pp. 795-831, Wiley-Interscience (1983) and "Vegetable Oils" Kirk Othmer Encyclopedia of Chemical Technology Vol. 23, pp. 717-741, Wiley-Interscience (1983). Illustrative lipids include, but are not limited to, poultry fat, tallow, lard, fish oil, milk fat, theobroma oil, corn oil, olive oil, safflower oil, cottonseed oil, coconut oil, peanut oil, soy bean oil, rapeseed oil, palm oil, sunflower oil, and mixtures thereof. Partially hydrogenated derivatives of these lipids may also be used. Lipids of this type are comprised predominantly of glyceride esters of $C_{12}$-$C_{24}$ fatty acids. The fatty acids typically are mixtures of saturated and unsaturated fatty acids. A single glyceryl residue may bear up to three fatty acid moieties, each of which may be the same or different and which may vary in chain length, degree of unsaturation, and so forth. Preferably, the lipid will contain at least one glyceryl ester of at least one $C_{12}$-$C_{24}$ unsaturated fatty acid selected from the group consisting of oleic acid, linoleic acid, ricinoleic acid, gadoleic acid, arachidonic acid, eicosatetraenoic acid, cetoleic acid, docosapentaenoic acid, palmitoleic acid, linoleic acid, eleostearic acid, and erucic acid.

The high temperature media compositions of this invention are comprised of from 25 to 75 weight percent of the lipid and from about 75 to 25 weight percent of the esterified propoxylated glycerin. Sufficient lipid is added to enhance the thermal stability of the esterified propoxylated glycerin relative to the stability of the esterified propoxylated glycerin in the absence of the lipid. This amount will vary, of course, depending on the chemical composition of the lipid (especially the level of unsaturation present, as reflected in the iodine number value). For reasons that are not well understood, the enhancement in thermal stability observed is generally far greater than would be expected from a simple dilution effect.

The proportions of the components in the composition may also be varied to achieve a particular desired

caloric content if the composition is to be used as a reduced calorie high temperature cooking medium. The edible lipid derived from a vegetable, animal, or marine source helps to stabilize the composition while the esterified propoxylated glycerin reduces the number of calories imparted to food cooked in the composition.

If the composition is to be used as a functional fluid, the viscosity, density, pour point, upper temperature limit, and other physical properties may similarly be adjusted as desired by changing the relative proportions of the components of the composition.

The following examples further illustrate this invention.

## EXAMPLES

### General Testing Procedure

Esterified propoxylated glycerin compounds were either obtained from commercial sources or synthesized and purified by known methods. Blends of these glycerin compounds with various lipids were prepared and tested for thermal and oxidative stability by heating 200 g of each blend at a temperature of from about 190°C to 200°C in a 25,4 cm (10 inch) diameter frying pan coated with a non-stick finish. The glycerin compounds and lipids were also tested individually for comparative purposes. The weight of each sample was recorded at specific intervals in order to measure the weight of volatiles lost over time. The results of the stability tests are listed in Table 1.

### Preparation of Esterified Propoxylated Glycerin (EPG-1)

Propoxylated glycerin (550 molecular weight) was heated with a mixture of lauric, myristic, palmitic, and stearic acid (coconut fatty acids) at 200-230°C under nitrogen until 95% conversion of the hydroxyl groups was obtained (as measured by hydroxyl number analysis). The excess acid was removed by vacuum steam distillation and by the addition of a saturated caustic solution. Following filtration, the remaining fatty acid salts were removed by adsorption onto magnesium silicate. The product was a clear light yellow liquid having a freezing point of -5°C.

### Discussion of Results

Examples 1-6 demonstrate that an esterified propoxylated glycerin prepared using coconut fatty acids has relatively poor thermal stability at 200°C, even when treated with 1000 ppm of a conventional stabilizer or antioxidant. However, Examples 8-10 and 14 show that when the esterified propoxylated glycerin is blended with a lipid such as corn oil, soybean oil or partially hydrogenated vegetable oil having an iodine number of at least about 10, the resulting composition is much more stable at high temperatures than the esterified propoxylated glycerin alone (Example 1).

Furthermore, this enhancement in stability is far greater than would be expected from a simple dilution effect resulting from the presence of the more stable lipids. This becomes apparent when the weight loss observed for each component alone is compared to the results obtained for the blends. For example, a weight loss of about 7 percent would be expected for a 50/50 blend of EPG-1 and corn oil after 4 hours at 200°C based on the results for EPG-1 (Example 1) and corn oil (Example 12) alone. However, the actual weight loss is only 0.84%, which is only slightly greater than is observed for the corn oil alone.

The importance of using a lipid having an iodine number of at least about 10 is illustrated by Example 17. When tristearin (the triglyceride ester of stearic acid, a completely saturated fatty acid) was blended with EPG-1, the weight loss after 4 hours at 200°C was close to 8 percent or about the result expected from a dilution effect.

## EXAMPLES 15-19

These examples demonstrate that the compositions of this invention are useful as stable high temperature cooking media.

## EXAMPLE 15

An esterified propoxylated glycerin (EPG-2) was prepared in the same manner described above using 550 molecular weight propoxylated glycerin and a mixture of fatty acids derived from soybean oil. Fresh french fry cut potatoes were added to a mixture of 500 mL EPG-2 and 500 mL vegetable oil which had been preheated

to 190-200°C. After frying for 15 minutes, the potatoes were removed from the blend and allowed to drain. The fried potatoes were equivalent in appearance, color, odor, and taste to potatoes fried in pure vegetable oil.

EXAMPLE 16

The frying procedure of Example 19 was repeated using 500 mL vegetable oil and 500 mL EPG-1. Similar results were observed.

EXAMPLE 17

A blend of EPG-2 (750 mL) and vegetable oil (250 mL) was prepared and the frying procedure of Example 19 repeated. Once again, the appearance, color, odor, and taste of the fried potatoes were indistinguishable from that of potatoes cooked in pure vegetable oil.

EXAMPLE 18 (Comparative)

When 1000 mL of EPG-1 alone was used as the cooking medium for fresh cut potatoes following the procedure of Example 19, significantly more smoking (indicative of thermal decomposition) was observed than when either pure vegetable oil or EPG/vegetable oil mixtures were employed. However, the appearance, color, odor, and taste of the fried potatoes were not greatly different from food cooked in pure vegetable oil.

EXAMPLE 19

Fresh chicken legs were fried in a mixture of 500 mL EPG-1 and 500 mL vegetable oil The amount of smoke generated was no greater than that observed using pure vegetable oil; the appearance, color, odor,and taste were unaffected.

TABLE 1

| EXAMPLE # | ESTERIFIED PROPOXYLATED GLYCERIN TYPE | ESTERIFIED PROPOXYLATED GLYCERIN PARTS | LIPID TYPE | LIPID PARTS | TEMP. (°C) AVE. | TEMP. (°C) MAX. | TIME (HR.) | % WEIGHT LOSS |
|---|---|---|---|---|---|---|---|---|
| 1* | EPG-1 | 100 | - | - | 191 | 201 | 1<br>4 | 3.7<br>14.7 |
| 2* | EPG-1[1] | 100 | - | - | 197 | 206 | 1<br>4 | 2.6<br>26.7 |
| 3* | EPG-1[2] | 100 | - | - | 198 | 202 | 1<br>4 | 5.9<br>19.9 |
| 4* | EPG-1[3] | 100 | - | - | 195 | 202 | 2<br>4 | 8.2<br>19.9 |
| 5* | EPG-1[4] | 100 | - | - | 195 | 200 | 2<br>4 | 7.0<br>21.5 |
| 6* | EPG-1[5] | 100 | - | - | 192 | 201 | 2<br>4 | 3.8<br>16.1 |
| 7* | - | - | PHVO[6] | 100 | 198 | 204 | 1<br>4 | 0.34<br>1.3 |
| 8 | EPG-1 | 50 | PHVO[6] | 50 | 194 | 195 | 1<br>4 | 0.31<br>0.80 |
| 9 | EPG-1[1] | 50 | PHVO[6] | 50 | 194 | 202 | 1<br>4 | 0.23<br>1.9 |
| 10 | EPG-1 | 75 | PHVO[6] | 25 | 190 | 199 | 1<br>4 | 0.83<br>3.2 |
| 11 | EPG-1 | 50 | Corn Oil | 50 | 193 | 199 | 1<br>4 | 0.70<br>1.6 |
| 12* | - | - | Corn Oil | 100 | 205 | 207 | 1<br>4 | 0.74<br>0.84 |

TABLE 1 (Continued)

| EXAMPLE # | ALIPHATIC ETHER TYPE | ALIPHATIC ETHER PARTS | FATTY ACID ESTERS TYPE | FATTY ACID ESTERS PARTS | TEMP. (°C) AVE. | TEMP. (°C) MAX. | TIME (HR.) | % WEIGHT LOSS |
|---|---|---|---|---|---|---|---|---|
| 13 | EPG-1 | 50 | Tristearin | 50 | 195 | 206 | 1<br>4 | 2.08<br>7.95 |
| 14 | EPG-1 | 50 | Soybean Oil | 50 | 194 | 201 | 1<br>4 | 0.51<br>1.93 |

NOTES:

* Comparative example
[1] Containing 1000 ppm α-tocopherol
[2] Containing 1000 ppm mixed tocopherols
[3] Containing 1000 ppm TBHQ (tert-butylhydroquinone)
[4] Containing 1000 ppm BHT (butylated hydroxytoluene)
[5] Containing 1000 ppm BHA (butylated hydroxyanisole)
[6] Partially Hydrogenated Vegetable Oil (Crisco® shortening, a product of Procter & Gamble)

## Claims

1. A reduced calorie oil-like composition suitable for use as a high temperature cooking medium comprising (a) from 25 to 75 weight percent of a substantially non-caloric esterified propoxylated glycerin of formula

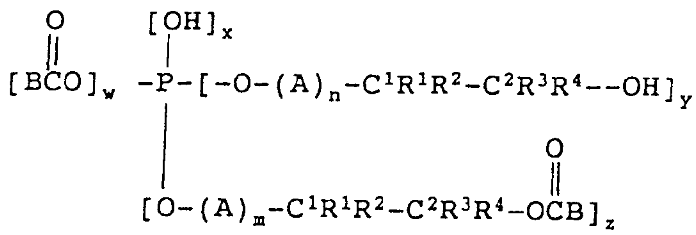

wherein P is a glyceryl radical, the sum of w + x + y + z is 3, $\frac{x+y}{w+x+y+z}$ is an average number less than 0.15, z is an average number in the range of from 2 to 3, A is an oxypropylene unit, the average value of [(m · z) + n · y)] is in the range from O to 25, B is a $C_{11}$-$C_{21}$ hydrocarbon group, one only of $R^1$, $R^2$, $R^3$ and $R^4$ is methyl with the other R groups being hydrogen, and $C^2$ is a carbon that on average is from 0 to 15 percent primary; and
(b) from 25 to 75 weight percent of an edible lipid containing a glyceryl ester of a $C_{12}$-$C_{24}$ unsaturated fatty acid, wherein the lipid has an iodine number of at least 10 and wherein the amount of lipid is sufficient to synergistically enhance the thermal stability of the esterified propoyxlated glycerol.

2. The composition of claim 1 wherein z is 3.

3. The composition of claim 1 or claim 2 wherein B is a saturated $C_{11}$-$C_{21}$ hydrocarbon group.

4. The composition of claim 1, claim 2 or claim 3 wherein the edible lipid is selected from poultry fat, tallow, lard, fish oil, milk fat, theobroma oil, corn oil, olive oil, safflower oil, cottonseed oil, coconut oil, peanut oil, soybean oil, rapeseed oil, palm oil, sunflower oil, partially hydrogenated derivatives thereof, and mixtures thereof.

5. The composition of any one of claims 1 to 4 wherein the edible lipid has an iodine number of at least 50.

6. The composition of any one of claims 1 to 5 wherein $C^2$ is a carbon that on average is from 0 to 5 percent primary.

7. A method of thermally stabilizing an esterified propoxylated glycerol of formula

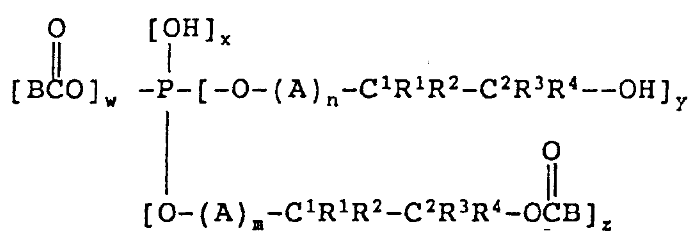

wherein P is a glyceryl radical, the sum of w + x + y + z is 3, $\frac{x+y}{w+x+y+z}$ is an average number less than 0.15, z is an average number in the range of from 2 to 3, A is an oxypropylene unit, the average value of [(m · z) + n · y)] is in the range from O to 25, B is a $C_{11}$-$C_{21}$ hydrocarbon group, one only of $R^1$, $R^2$, $R^3$, and $R^4$ is methyl with the other R groups being hydrogen, and $C^2$ is a carbon that on average is from 0 to 15 percent primary, which comprises combining from 25 to 75 parts by weight of the esterified propoxylated glycerol with 100-X parts by weight of an edible lipid containing a glyceryl ester of a $C_{12}$-$C_{24}$ unsaturated fatty acid and having an iodine number of at least 10, wherein X represents the parts by weight of the esterified propoxylated glycerol.

8. A method as claimed in claim 7 where the edible lipid is selected from poultry fat, tallow, lard, fish oil, milk

fat, theobroma oil, corn oil, olive oil, safflower oil, cottonseed oil, coconut oil, peanut oil, soybean oil, rapeseed oil, palm oil, sunflower oil, partially hydrogenated derivatives thereof, and mixtures thereof.

9. A method as claimed in claim 7 or claim 8 wherein the edible lipid has an iodine number of at least 50.

**Patentansprüche**

1. Kalorienreduzierte ölähnliche Zusammensetzung, die zum Kochen bei hoher Temperatur geeignet ist und folgende Bestandteile umfaßt:
a) 25 bis 75 Gew.% eines im wesentlichen kalorienfreien veresterten propoxylierten Glycerins der Formel

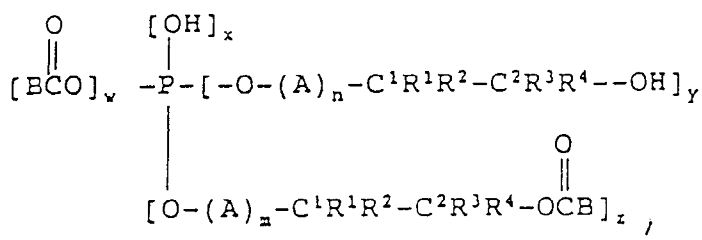

in der P ein Glycerylrest ist, die Summe von w+x+y+z 3 ist, $\frac{x+y}{w+x+y+z}$ eine Durchschnittszahl von weniger als 0,15 ist, z eine Durchschnittszahl im Bereich von 2 bis 3 ist, A eine Oxypropyleneinheit ist, der Durchschnittswert von $[(m \cdot z)+n \cdot y)]$ im Bereich von 0 bis 25 liegt, B eine $C_{11}$-$C_{21}$-Kohlenwasserstoffgruppe ist, nur eine der Gruppen $R^1$, $R^2$, $R^3$ und $R^4$ Methyl ist und die anderen R-Gruppen Wasserstoff sind, und $C^2$ ein im Durchschnitt 0 bis 15 % primärer Kohlenstoff ist, und
b) 25 bis 75 Gew.% eines eßbaren Lipids, das einen Glycerylester einer $C_{12}$-$C_{14}$ ungesättigten Fettsäure enthält, in der das Lipid eine Iodzahl von mindestens 10 hat und die Lipidmenge ausreicht, um die thermische Stabilität des veresterten propoxylierten Glycerins synergistisch zu verbessern.

2. Zusammensetzung nach Anspruch 1, in der z 3 ist.

3. Zusammensetzung nach Anspruch 1 oder 2, in der B eine gesättigte $C_{11}$-$C_{21}$ Kohlenwasserstoffgruppe ist.

4. Zusammensetzung nach Anspruch 1, 2 oder 3, in der das eßbare Lipid aus Geflügelfett, Talg, Schweinefett, Fischöl, Milchfett, Theobromaöl, Maisöl, Olivenöl, Safloröl, Baumwollsamenöl, Kokosnußöl, Erdnußöl, Sojabohnenöl, Rapssamenöl, Palmöl, Sonnenblumenöl, aus deren teilweise hydrierten Derivaten oder deren Mischungen ausgewählt ist.

5. Zusammensetzung nach einem der Ansprüche 1 bis 4, in der das eßbare Lipid eine Iodzahl von mindestens 50 hat.

6. Zusammensetzung nach einem der Ansprüche 1 bis 5, in der $C^2$ ein Kohlenstoff ist, der im Durchschnitt O bis 5 % primär ist.

7. Verfahren zur thermischen Stabilisierung eines verestertern propoxylierten Glycerins der Formel

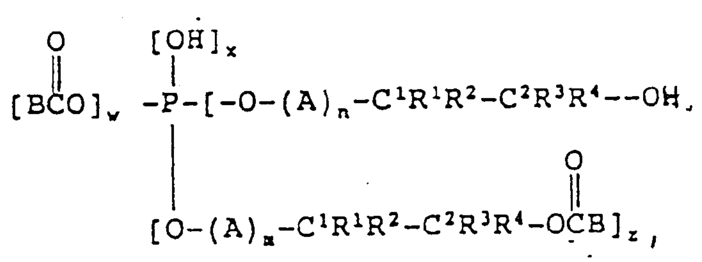

in der P ein Glycerylrest ist, die Summe von w+x+y+z 3 ist, $\frac{x+y}{w+x+y+z}$ eine Durchschnittszahl von weniger als 0,15 ist, z eine Durchschnittszahl im Bereich von 2 bis 3 ist, A eine Oxypropyleneinheit ist, der Durchschnittswert von [(m·z)+n·y)] im Bereich von 0 bis 25 liegt, B eine $C_{11}$-$C_{21}$-Kohlenwasserstoffgruppe ist, nur eine der Gruppen $R^1$, $R^2$, $R^3$ und $R^4$ Methyl ist und die anderen R-Gruppen Wasserstoff sind, und $C^2$ einim Durchschnitt 0 bis 15 % primärer Kohlenstoff ist, bei dem man 25 bis 75 Gew.% des veresterten propoxylierten Glycerols mit 100-X Gewichtsteilen eines eßbaren Lipids kombiniert, das einen Glycerylester einer $C_{12}$-$C_{24}$ ungesättigten Fettsäure enthält und eine Iodzahl von mindestens 10 hat, in dem X die Gewichtsteile des veresterten propoxylierten Glycerins bedeutet.

**8.** Verfahren nach Anspruch 7, bei dem das eßbare Lipid aus Geflügelfett, Talg, Schweinefett, Fischöl, Milchfett, Theobromaöl, Maisöl, Olivenöl, Safloröl, Baumwollsamenöl, Kokosnußöl, Erdnußöl, Sojabohnenöl, Rapssamenöl, Palmöl, Sonnenblumenöl, aus deren teilweise hydrierten Derivaten oder deren Mischungen ausgewählt ist.

**9.** Verfahren nach Anspruch 7 oder 8, bei dem das eßbare Lipid eine Iodzahl von mindestens 50 hat.

## Revendications

**1.** Composition ressemblant à de l'huile à teneur réduite en calories, utilisable comme milieu de cuisson à haute température, comprenant :

(a) de 25 à 75% en poids d'une glycérine estérifiée propoxylée pratiquement sans calorie, représentée par la formule :

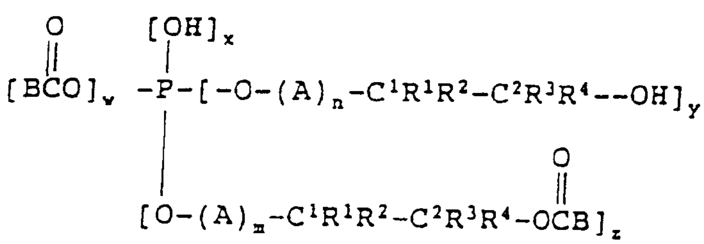

dans laquelle P est un radical glycéryle, la somme de w+x+y+z est 3, $\frac{x+y}{w+x+y+z}$ est un nombre moyen inférieur à 0,15, z est un nombre moyen compris dans la gamme de 2 à 3, A est une unité oxypropylène, la valeur moyenne de [(m · z) + (n · y)] est comprise dans la gamme de 0 à 25, B est un groupe hydrocarboné en $C_{11-21}$, l'un seul des $R^1$, $R^2$, $R^3$ et $R^4$ est un groupe méthyle et les autres sont un atome d'hydrogène, et $C^2$ est un carbone qui, en moyenne, est primaire de 0 à 15%; et

(b) de 25 à 75% en poids d'un lipide comestible contenant un ester de glycéryle d'un acide gras insaturé en $C_{12-24}$, le lipide ayant un indice d'iode d'au moins 10 et la quantité de lipide étant suffisante pour augmenter de façon synergique la stabilité thermique du glycérol propoxylé estérifié.

**2.** Composition suivant la revendication 1, dans laquelle z est 3.

**3.** Composition suivant les revendications 1 ou 2, dans laquelle B est un groupe hydrocarboné saturé en $C_{11-21}$.

**4.** Composition suivant l'une quelconque des revendications 1 à 3, dans laquelle le lipide comestible est choisi parmi la graisse de volaille, le suif, le lard, l'huile de poisson, la crème de lait, l'huile de théobrome, l'huile de maïs, l'huile d'olive, l'huile de carthame, l'huile de coton, l'huile de coco, l'huile d'arachide, l'huile de soja, l'huile de colza, l'huile de palme, l'huile de tournesol, leurs dérivés partiellement hydrogénés, et leurs mélanges.

**5.** Composition suivant l'une quelconque des revendications 1 à 4, dans laquelle le lipide comestible a un indice d'iode d'au moins 50.

**6.** Composition suivant l'une quelconque des revendications 1 à 5, dans laquelle $C^2$ est un carbone qui, en

moyenne, est primaire de 0 à 5%.

7. Procédé pour stabiliser thermiquement un glycérol estérifié propoxylé représenté par la formule :

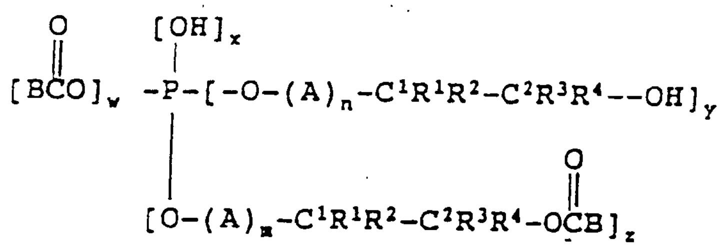

dans laquelle P est un radical glycéryle, la somme de w+x+y+z est 3, $\frac{x + y}{w + x + y + z}$ est un nombre moyen inférieur à 0,15, z est un nombre moyen compris dans la gamme de 2 à 3, A est une unité oxypropylène, la valeur moyenne de [(m . z) + (n . y)] est comprise dans la gamme de 0 à 25, B est un groupe hydrocarboné en $C_{11-21}$, l'un seul des $R^1$, $R^2$, $R^3$ et $R^4$ est un groupe méthyle et les autres sont un atome d'hydrogène, et $C^2$ est un carbone qui, en moyenne, est primaire de 0 à 15%,
qui comprend la combinaison de 25 à 75 parties en poids du glycérol estérifié propoxylé avec 100-X parties en poids d'un lipide comestible contenant un ester de glycéryle d'un acide gras insaturé en C12-24 et ayant un indice d'iode d'au moins 10, dans lequel X représente les parties en poids du glycérol estérifié propoxylé.

8. Procédé suivant la revendication 7, dans lequel le lipide comestible est choisi parmi la graisse de volaille, le suif, le lard, l'huile de poisson, la crème de lait, l'huile de théobrome, l'huile de maïs, l'huile d'olive, l'huile de carthame, l'huile de coton, l'huile de coco, l'huile d'arachide, l'huile de soja, l'huile de colza, l'huile de palme, l'huile de tournesol, leurs dérivés partiellement hydrogénés, et leurs mélanges.

9. Procédé suivant les revendications 7 ou 8, dans lequel le lipide comestible a un indice d'iode d'au moins 50.